(19) Europäisches Patentamt
European Patent Office
Office européen des brevets

(11) **EP 3 327 819 B1**

(12) **FASCICULE DE BREVET EUROPEEN**

(45) Date de publication et mention
de la délivrance du brevet:
**27.03.2019 Bulletin 2019/13**

(51) Int Cl.:
**H01M 2/02** *(2006.01)*     **H01M 10/0525** *(2010.01)*
**H01M 10/0585** *(2010.01)*

(21) Numéro de dépôt: **17202849.0**

(22) Date de dépôt: **21.11.2017**

(54) **ACCUMULATEUR METAL-ION A EMPILEMENT D'ELECTRODES, A FORTE DENSITE D'ENERGIE ET A FORTE CAPACITE**

METALLIONEN-AKKUMULATOR MIT EINEM STAPEL ELEKTRODEN, GEKENNZEICHNET DURCH EINE HOHE ENERGIEDICHTE UND EINE HOHE KAPAZITÄT

METAL-ION ACCUMULATOR PROVIDED WITH A STACK OF ELECTRODES AND CHARACTERIZED BY A HIGH ENERGY DENSITY AND A HIGH CAPACITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.11.2016 FR 1661411**

(43) Date de publication de la demande:
**30.05.2018 Bulletin 2018/22**

(73) Titulaire: **Commissariat à l'Energie Atomique et aux Energies Alternatives 75015 Paris (FR)**

(72) Inventeurs:
• **DEWULF, Frédéric 38500 VOIRON (FR)**
• **CHAMI, Marianne 38600 FONTAINE (FR)**
• **MARTINET, Sébastien 38210 ST QUENTIN SUR ISERE (FR)**
• **SALOMON, Jérémie 38250 VILLARD DE LANS (FR)**

(74) Mandataire: **Nony 11 rue Saint-Georges 75009 Paris (FR)**

(56) Documents cités:
**EP-A1- 2 858 165     EP-A1- 2 933 865 US-A1- 2013 323 564**

EP 3 327 819 B1

**Description**

<u>Domaine technique</u>

La présente invention concerne le domaine des générateurs électrochimiques métal-ion, qui fonctionnent selon le principe d'insertion ou de désinsertion, ou autrement dit intercalation-désintercalation, d'ions métalliques dans au moins une électrode.

Elle concerne plus particulièrement un accumulateur électrochimique métal-ion comprenant un empilement de cellules électrochimiques élémentaires comprenant chacune une anode, une cathode, et un séparateur imprégné d'électrolyte intercalé entre l'anode et la cathode, deux collecteurs de courant dont un est relié à l'anode et l'autre à la cathode, et un emballage de forme allongée selon un axe longitudinal, l'emballage étant agencé pour loger les cellules électrochimiques avec étanchéité tout en étant traversé par une partie des collecteurs de courant formant les bornes de sortie, aussi appelés pôles.

Le séparateur peut être constitué d'un ou plusieurs films.

L'emballage peut être souple ou rigide en constituant un boitier. Le boitier peut comporter un couvercle et un conteneur, usuellement appelé godet, ou comporter un couvercle, un fond et une enveloppe latérale assemblée à la fois au fond et au couvercle.

La présente invention vise à améliorer la dissipation thermique et donc la durée de vie des accumulateurs métal-ion à empilement d'électrodes, en particulier ceux à forte capacité.

Bien que décrite en référence à un accumulateur Lithium-ion, l'invention s'applique à tout accumulateur électrochimique métal-ion, c'est-à-dire également Sodium-ion, Magnésium-ion, Aluminium-ion...

<u>Art antérieur</u>

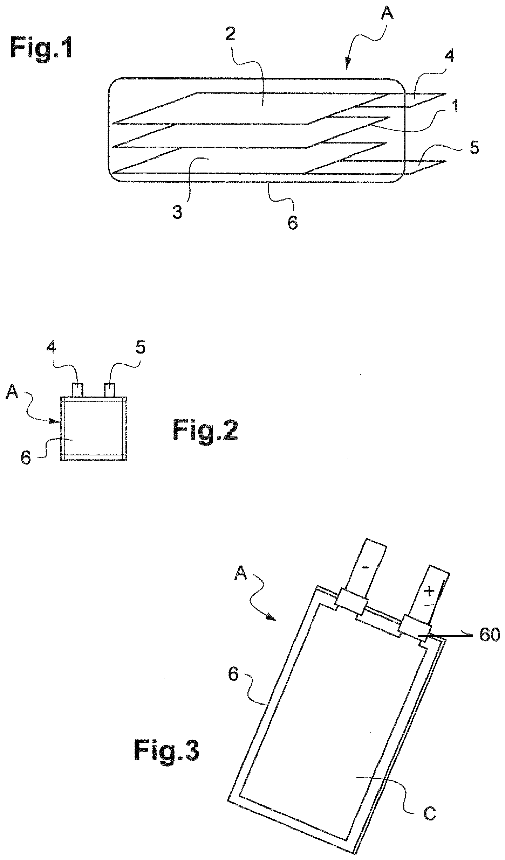

Telle qu'illustrée schématiquement en figures 1 et 2, une batterie ou accumulateur lithium-ion comporte usuellement au moins une cellule électrochimique C constituée d'un séparateur imprégné d'un constituant électrolyte 1 entre une électrode positive ou cathode 2 et une électrode négative ou anode 3, un collecteur de courant 4 connecté à la cathode 2, un collecteur de courant 5 connecté à l'anode 3 et enfin, un emballage 6 agencé pour contenir la cellule électrochimique avec étanchéité tout en étant traversé par une partie des collecteurs de courant 4, 5, formant les bornes de sortie.

L'architecture des batteries lithium-ion conventionnelles est une architecture que l'on peut qualifier de monopolaire, car avec une seule cellule électrochimique comportant une anode, une cathode et un électrolyte. Plusieurs types de géométrie d'architecture monopolaire sont connus :

- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte peut être de forme solide, liquide ou gel. Sous cette dernière forme, le constituant peut comprendre un séparateur en polymère ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode est constituée de matériaux d'insertion du cation Lithium qui sont en général composite, comme le phosphate de fer lithié $LiFePO_4$, l'oxyde de cobalt lithié LiCo02, l'oxyde manganèse lithié, éventuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, $LiNiMnCoO_2$ ou l'oxyde de nickel cobalt aluminium lithié $LiNiCoAlO_2$.

L'électrode négative ou anode est très souvent constituée de carbone, graphite ou en $Li_4Ti_5O_{12}$ (matériau titanate), éventuellement également à base de silicium ou à base de lithium, ou à base d'étain et de leurs alliages ou de composite formé à base de silicium. Cette électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

L'anode et la cathode en matériau d'insertion au Lithium peuvent être déposées en continu selon une technique usuelle sous la forme d'une couche active sur une feuille ou feuillard métallique constituant un collecteur de courant.

Le collecteur de courant connecté à l'électrode positive est en général en aluminium.

Le collecteur de courant connecté à l'électrode négative est en général en cuivre, en cuivre nickelé ou en aluminium.

Traditionnellement, une batterie ou accumulateur Li-ion utilise un couple de matériaux à l'anode et à la cathode lui permettant de fonctionner à un niveau de tension typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages souples sont usuellement fabriqués à partir d'un matériau composite multicouche, constitué d'un empilement de couches d'aluminium recouvertes par un ou plusieurs film(s) en polymère laminés par collage.

La figure 3 illustre ce type d'emballage souple 6 qui est agencé pour contenir la cellule électrochimique C avec étanchéité tout en étant traversé par une partie 40, 50 de deux lamelles 4, 5 formant les pôles et qui s'étendent dans le plan de la cellule électrochimique. Comme montré en figure 3, des renforts en polymère 60 à base de polyoléfine peuvent être prévus pour améliorer le scellage à chaud de l'emballage 6 autour des lamelles 4, 5. L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité se détériore fortement au cours du temps du fait de la non-tenue chimique du scellage réalisé.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à $10^{-8}$ mbar.l/s, ou dans des milieux à fortes contraintes comme le domaine aéronautique ou spatial.

L'avantage principal des emballages rigides est ainsi leur étanchéité élevée et maintenue au cours du temps du fait que la fermeture des boitiers est réalisée par soudure, en générale par soudure au laser.

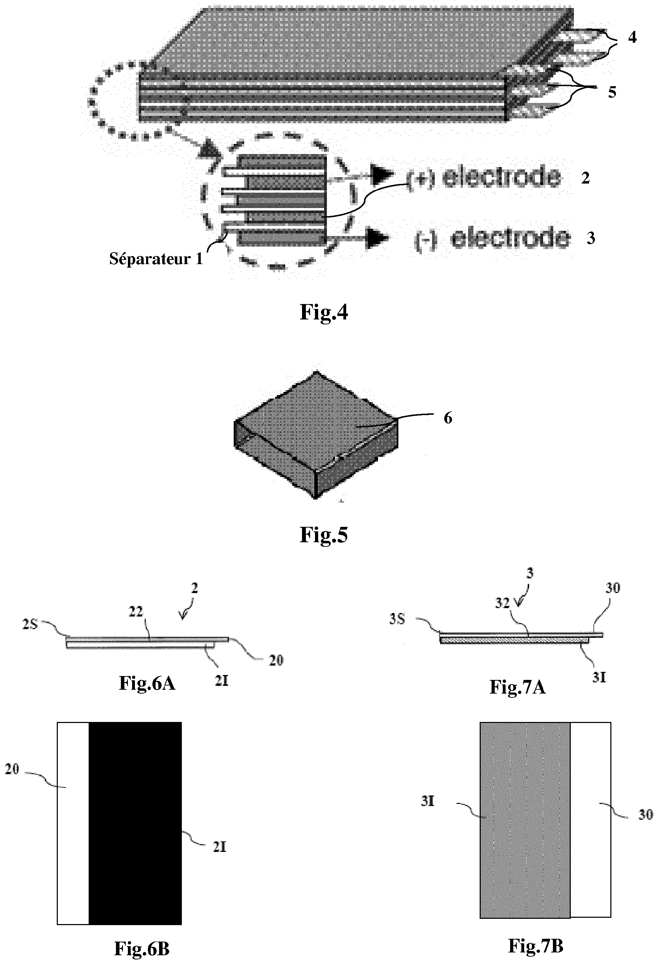

On a représenté schématiquement en figure 4, un accumulateur Li-ion d'architecture en empilement de cellules électrochimiques élémentaires comprenant chacune un séparateur imprégné d'un constituant électrolyte 1 intercalé entre une cathode 2 et une anode 3. Comme visible sur cette figure 4, les collecteurs de courant 4, 5 destinés à assurer la sortir du courant sont généralement agencés d'un même côté latéral de l'empilement.

Cet empilement de forme prismatique est destiné à être logé dans une enveloppe latérale de forme parallélépipédique 7 (figure 5) qui constitue une partie d'un boitier rigide également de forme prismatique.

Un tel boitier prismatique a pour principaux avantages :

- de permettre une dissipation de chaleur sur les faces des cellules empilées qui sont de grande surface unitaire, et donc d'augmenter la taille des électrodes et par-là la capacité des cellules ;
- de pouvoir s'intégrer physiquement, facilement dans un pack batterie en minimisant le volume mort restant, grâce à leurs faces planes.

Ainsi, parmi les designs d'accumulateurs Li-ion, la géométrie prismatique avec un empilement d'électrodes s'avère très intéressante pour les applications de hautes densités d'énergie, grâce à sa faculté à dissiper aisément la chaleur produite lors du fonctionnement.

On a représenté, respectivement en figures 6A et 6B et en figures 7A et 7B, une électrode positive ou cathode 2 et une électrode négative ou anode 3 à partir desquelles un empilement de cellules élémentaires avec chacune comprenant un séparateur 4 intercalé entre cathode 2 et anode 3. La cathode 2 est constituée d'un substrat 2S formé d'un feuillard métallique qui supporte dans sa portion centrale 22, une couche continue de matériau actif d'insertion au lithium 2I, tandis que sa bande latérale (rive) 20 est dépourvue de matériau actif d'insertion. De même, l'anode 3 est constituée d'un substrat 2S formé d'un feuillard métallique qui supporte dans sa portion centrale 32, une couche continue de matériau actif d'insertion au lithium 3I, et sa rive 30 est dépourvue de matériau actif d'insertion. Chaque feuillard métallique 2S, 3S est réalisé en un seul tenant, c'est-à-dire avec les mêmes caractéristiques géométriques et métallurgiques sur toute sa surface.

Par « bande non revêtue » ou « rive », on entend ici et dans le cadre de l'invention, une portion latérale d'une feuille métallique, aussi appelée feuillard, formant un collecteur de courant, qui n'est pas recouverte d'un matériau d'insertion aux ions métal, tel que le lithium dans le cas d'un accumulateur Li-ion.

Ces électrodes 2, 3 pour accumulateurs Li-ion sont réalisés usuellement selon un process en continu par une technique d'enduction du matériau d'insertion actif sur le feuillard métallique afin de constituer la couche continue active. Ces techniques d'enduction sont connues sous les termes anglo-saxons « slot die » ou « roll to roll transfert ».

Bien que satisfaisants sur de nombreux aspects, les accumulateurs Li-ion de forme prismatique à empilement d'électrodes, en particulier ceux à forte capacité, posent des problématiques importantes de dissipation thermique dues à leur design intrinsèque.

Dans l'optique d'améliorer la thermicité au sein d'un pack-batterie à plusieurs accumulateurs de géométrie prismatique, le brevet US 2013/0323564 A1 propose l'agencement des accumulateurs séparés les uns des autres par un dissipateur thermique inséré dans un canal d'un boitier de dissipation thermique. Or, cette solution augmente l'encombrement et le poids des pack-batteries.

En effet, comme expliqué ci-après et mis en évidence par des résultats d'étude, lors de leur fonctionnement sous passage de courant en mode charge ou décharge, des échauffements se produisent au sein des accumulateurs Li-Ion prismatiques à empilement d'électrodes.

On pourra se reporter tout d'abord aux publications [1] et [2] qui étudient l'influence du type de design des accumulateurs Li-ion de géométrie prismatique à empilement d'électrodes.

En particulier, la publication [2] révèle l'influence des dimensions que sont la largeur, hauteur et l'épaisseur d'un accumulateur Li-ion prismatique à empilement d'électrodes.

Dans cette publication [2], le comportement thermique de quatre accumulateurs prismatiques de formats différents, est étudié. Les résultats divulgués montrent que l'accumulateur de plus petite taille donc avec une faible capacité, présente une meilleure dissipation thermique.

A contrario, dès qu'un accumulateur prismatique de plus forte capacité est envisagé, ce dernier doit préférentiellement présenter une surface large et une épaisseur totale la plus fine possible, afin d'éviter l'accumulation de chaleur au coeur de l'empilement.

Il ressort ainsi cette publication [2], que des accumulateurs relativement fins et de grandes surfaces permettent une meilleure dissipation thermique.

Cela étant, selon les courants impliqués typiquement à un régime supérieur à 2C, la position des connectiques devient cruciale, de tels accumulateurs nécessitent l'utilisation de connectiques de collecteur de courant larges, agencées sur les bords longitudinaux de l'empilement, de manière opposée l'une à l'autre et ce, afin d'optimiser le flux des électrons et ainsi d'éviter que les régions à proximité des connectiques ne soient sollicitées majoritairement par rapport au reste l'accumulateur.

On rappelle ici que comme défini usuellement, un régime 1C signifie une valeur de courant correspondant à 1 fois la valeur de la capacité nominale de l'accumulateur. Ainsi pour un accumulateur de 10Ah, une décharge à régime de 1C signifie que l'on décharge sous un courant de 10A.

La configuration d'agencement des connectiques à l'opposé l'une de l'autre par rapport à la surface de l'empilement d'un accumulateur implique des conséquences lorsqu'on souhaite réaliser une batterie, usuellement appelé pack-batterie, par assemblage d'une pluralité d'accumulateurs prismatiques à empilement, reliés en série ou en parallèle électrique entre eux.

En effet, dans cette configuration, deux zones à l'intérieur de la batterie doivent être dégagées pour procéder à la liaison électrique des connectiques +/- entre accumulateurs. Cette configuration peut alors s'avérer plus consommatrice d'espace, ce qui diminue la densité d'énergie volumique (en Wh/Litre) de la batterie dans son ensemble.

A ce jour, pour des applications nécessitant à la fois de l'énergie en vue d'une forte autonomie, mais aussi de la puissance par intermittence sous forme d'impulsions de courant, il est le plus souvent mis en oeuvre un assemblage d'accumulateurs de densité d'énergie élevée, mais de plus petites dimensions et donc de plus faible capacité.

Ces accumulateurs de petites dimensions présentent une résistance interne électrique élevée. Il est alors nécessaire de procéder à une mise en parallèle d'une quantité importante d'accumulateurs, typiquement dans un facteur fois 20 à fois 50 plus pour obtenir une quantité d'énergie équivalente à celle qui serait embarquée par un assemblage d'accumulateurs de plus grandes dimensions et donc de plus forte capacité.

Autrement dit, il serait bien plus intéressant pour le dimensionnement d'un pack-batterie de même niveau d'énergie, d'utiliser des accumulateurs prismatiques à empilement de grandes dimensions, de grande surface et de plus forte capacité en augmentant l'épaisseur totale de chaque accumulateur et avec des connectiques agencées du même côté de chaque accumulateur pour concentrer l'ensemble des connexions entre accumulateurs à l'intérieur du pack-batterie dans une même zone, de préférence sur une seule face.

Les inventeurs ont procédé à des essais comparatifs pour mettre en évidence cet intérêt mais aussi la limitation qu'il y a à utiliser des accumulateurs actuels d'épaisseur totale élevée du fait des échauffements qu'ils induisent.

Les essais ont été réalisés à partir d'accumulateurs prismatiques à empilement de type Lithium-polymère commercialisés sous la dénomination commerciale SLPB par la société coréenne KOKAM.

Deux groupes d'accumulateurs ont été comparés :

- le premier groupe, ci-après désigné groupe 1, concerne des accumulateurs commercialisés sous la référence commerciale « SLPB xxx 460330 », avec une capacité affichée de 100Ah à 240Ah pour une épaisseur totale allant de 7mm à 16mm.
- le deuxième groupe, ci-après désigné groupe 2, concerne des accumulateurs commercialisés sous la référence commerciale « SLPB xxx 216216», avec une capacité affichée de 25Ah à 53Ah pour une épaisseur totale allant de 6mm à 12mm.

Le tableau 1 ci-dessous résume les différentes caractéristiques dimensionnelles et de masse ainsi que le calcul de ratio entre épaisseur et surface pour chacun des accumulateurs des groupes 1 et 2.

On précise que tous les accumulateurs sont logés dans des emballages souples.

**TABLEAU 1**

| Groupe | Référence commerciale | Capacité (Ah) | Energie (Wh) | Largeur (mm) | Longueur (mm) | Surface S (mm$^2$) | Epaisseur E (mm) | Volume (1) | Ratio E/S (.m$^{-1}$) |
|---|---|---|---|---|---|---|---|---|---|
| 1 | SLPB70460330 | 100 | 370 | 462 | 327 | 151074 | 7 | 1,06 | 0,0463 |
| | SLPB12046033 0 | 150 | 555 | | | | 10,5 | 1,59 | 0,0695 |
| | SLPB14046033 0 | 200 | 740 | | | | 13,7 | 2,07 | 0,0907 |
| | SLPB14046033 0 | 240 | 888 | | | | 15,8 | 2,39 | 0,1046 |
| 2 | SLPB60216216 | 25 | 92,5 | 226 | 227 | 51302 | 6,3 | 0,32 | 0,1228 |
| | SLPB90216216 | 40 | 148 | | | | 9,3 | 0,48 | 0,1813 |
| | SLPB12021621 6 | 53 | 196,1 | | | | 12 | 0,62 | 0,2339 |

EP 3 327 819 B1

Il ressort de ce tableau que le ratio épaisseur/surface (E/S) est environ trois fois plus important pour les accumulateurs du groupe 1 comparativement à ceux du groupe 2.

En conditions adiabatiques, la relation entre l'énergie thermique dégagée et l'énergie produite par effet joule sous passage du courant dans un accumulateur est la suivante :

$$m. \times Cp \times dT = R.x \ I^2 \times t : (1)$$

dans laquelle

m représente la masse de l'accumulateur, en grammes,
Cp représente la Chaleur massique ou capacité calorifique moyenne de l'ensemble des constituants de l'accumulateur (en J/ g.°C),
dT représente la variation de température,
R représente la résistance interne de l'accumulateur, en mOhms,
I représente la valeur du courant traversant l'accumulateur, en ampère,
Et t représente le temps.

Après vérification expérimentale, on retient que la nature électrochimique et la proportion des constituants des accumulateurs Li-ion sont équivalentes quel que soit le groupe 1 ou 2.

Ceci permet d'appliquer dans la formule (1) ci-dessus une valeur Cp de chaleur massique, constante pour les deux groupes 1 et 2.

On en déduit l'expression suivante pour la détermination de la variation de température sous passage de courant :

$$dT = 1/ Cp \ \times \ (RI^2 / m) \times t.$$

En faisant l'hypothèse que la valeur Cp de chaleur massique est quasi constante pour tous les formats d'une même électrochimie, on peut donc estimer que, pour un laps de temps donné (t), la variation de température (dT) est directement proportionnelle au ratio $(RI^2/m)$.

Le tableau 2 ci-dessous résume le calcul du facteur d'échauffement $RI^2/m$ pour chacun des accumulateurs des groupes 1 et 2 considérés au tableau ci-dessus.

**TABLEAU 2**

| Groupe | Référence commerciale | Masse (kg) | Résistance interne (mOhm) | Régime C | Courant continu (ampère) | Puissance dissipée par effet Joule $RI^2$ (W) | Facteur $RI^2/m$ ($.m^{-1}$) |
|---|---|---|---|---|---|---|---|
| 1 | SLPB70460330 | 2,07 | 0,65 | 1 | 100 | 6500 | 3140 |
| | SLPB120460330 | 3,21 | 0,5 | | 150 | 11250 | 3505 |
| | SLPB140460330 | 4,18 | 0,5 | | 200 | 20000 | 4785 |
| | SLPB140460330 | 4,78 | 0,5 | | 240 | 28800 | 6025 |
| 2 | SLPB60216216 | 0,6 | 1,2 | 1 | 25 | 750 | 1250 |
| | SLPB90216216 | 0,9 | 0,9 | | 40 | 1440 | 1600 |
| | SLPB120216216 | 1,16 | 0,9 | | 53 | 2528 | 2179 |

A partir des données des tableaux 1 et 2, on peut tracer pour chacun des deux groupes 1 et 2, les courbes respectives du facteur d'échauffement $(RI^2/m)$ en fonction du ratio épaisseur/surface (E/S).

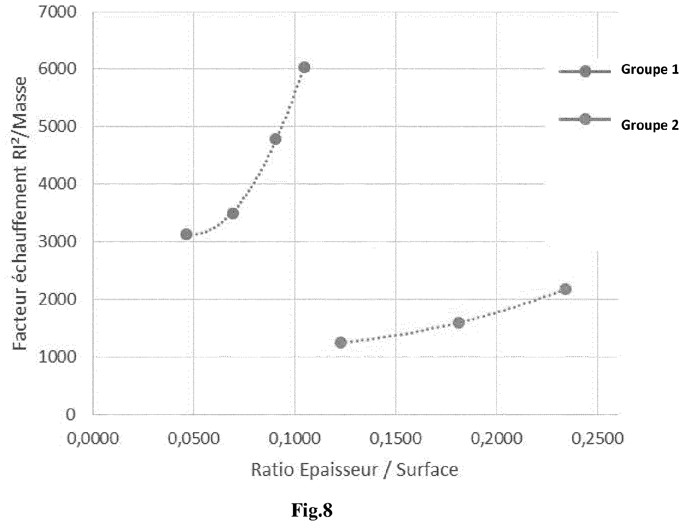

Ces courbes sont illustrés en figure 8.

A la lecture de ces courbes, on constate qu'à régime de passage de courant 1C équivalent, soit à densité de courant similaire pour les deux groupes 1 et 2 d'accumulateurs, le groupe 2, i.e. celui de surface la plus faible et donc avec un ratio E/S plus grand, présente une évolution du coefficient d'échauffement moins élevée.

Cette tendance se vérifie lorsque l'épaisseur de l'accumulateur et donc de l'empilement des électrodes qui le constituent, augmente (ratio E/S croissant), en comparaison du groupe 1 de surface plus importante.

On précise ici que si les conditions adiabatiques ne sont plus vérifiées pour les accumulateurs de petites surfaces, le raisonnement reste vrai en maximisant le facteur d'échauffement.

Ce comportement différent confirme que les accumulateurs de dimensions les plus importantes en surface (groupe 1), et dont les conditions thermiques seront proches de conditions adiabatiques, sont préférentiellement utilisées à des régimes de courant faible, typiquement inférieur à 2C) contrairement aux accumulateurs de dimensions plus faibles (groupe 2) qui peuvent convenir aux besoins de courants plus élevés, typiquement atteignant 3C à 5C ou davantage encore en cas utilisation avec des impulsions de courant.

En résumé, les accumulateurs Li-ion prismatiques à empilement d'électrodes, et plus généralement métal-ion, notamment à forte capacité présentent des limites dans leur design.

Une première limite de design est une grande épaisseur car, au-delà d'une certaine valeur d'épaisseur, des échauffements localisés apparaissent qui induisent une baisse de durée de vie et des performances avec notamment un fort risque de dysfonctionnement électrique et de sécurité. Ces échauffements localisés sont directement liés à la part de résistance ionique de la cellule électrochimique et aux conditions limites contraignant l'évacuation de la puissance thermique dégagée.

Une deuxième limite est une grande surface car, au-delà d'une certaine valeur de surface, le régime de passage de courant doit être abaissé au risque de voir se produire des échauffements au niveau des connectiques internes.

En effet, dans des accumulateurs d'empilement à grandes surfaces, les lignes de courant qui s'établissent de la périphérie des électrodes jusqu'aux connectiques externes sont plus longues: les électrons ayant plus distance à parcourir, la résistance électronique est de ce fait plus importante.

La proportion de résistance électronique dans la résistance interne globale de l'accumulateur est ainsi prépondérante dans les échauffements.

Il existe donc un besoin d'améliorer la durée de vie et les performances des accumulateurs au lithium, et plus généralement des accumulateurs métal-ion, notamment à forte capacité, qui sont réalisés par empilement d'électrodes.

En particulier, il existe un besoin d'améliorer la dissipation thermique au sein des accumulateurs au lithium, et plus généralement des accumulateurs métal-ion, notamment à forte capacité.

Le but de l'invention est de répondre au moins en partie à ce(s) besoin(s).

Exposé de l'invention

Pour ce faire, l'invention concerne, sous l'un de ses aspects, un accumulateur métal-ion, comprenant un empilement de cellules électrochimiques élémentaires comprenant chacune une cathode, une anode, et un séparateur imprégné d'électrolyte intercalé entre l'anode et la cathode, chaque anode et cathode étant constituée d'un substrat formé d'un feuillard métallique comprenant une portion centrale supportant, sur au moins une de ses faces principales, une couche de matériau actif d'insertion d'ion métal, l'épaisseur et le grammage des couches de matériau actif des électrodes d'une même polarité (anode ou cathode) ayant au moins deux valeurs différentes au sein de l'empilement, l'épaisseur et le grammage le plus faible étant celle des électrodes au centre de l'empilement.

Ainsi, l'invention consiste essentiellement à adapter l'épaisseur et le grammage de couche de matériau actif d'insertion en fonction de sa position dans l'empilement de l'accumulateur. On diminue l'épaisseur et le grammage de matière active d'insertion dans les zones susceptibles d'être soumises à des conditions thermiques importantes, lors de la durée de vie de l'accumulateur. Dans un accumulateur selon l'invention, l'épaisseur et le grammage évoluent dans le même sens. Par exemple, une augmentation du grammage des électrodes entraine une augmentation de leur épaisseur car la porosité est fixée, avantageusement elle reste la plus faible possible pour maximiser la densité d'énergie possible.

Les zones les plus concernées sont celles vers le centre de l'empilement.

Plus la surface d'électrode et donc de matière active d'insertion est importante plus on prévoit de variations progressives d'épaisseur et de grammage d'électrodes. Typiquement, en fonction des caractéristiques de l'accumulateur que l'on recherche, on peut réaliser 12 à 15 niveaux d'épaisseur différents pour des accumulateurs d'épaisseur totale de l'ordre de 20mm.

Les épaisseurs et le grammage des couches actives des électrodes négative et positive augmentent ou diminuent de préférence de façon identique en fonction de leur position dans l'empilement.

Dans la mise en oeuvre de l'invention, il va de soi que l'on veille à respecter les règles de conception qui impliquent qu'il doit toujours y avoir, par unité de surface, un excès de matériau actif négatif en vis-à-vis du matériau actif positif à base de métal, lithium dans le cas d'un Li-ion.

Si les conditions thermiques limites en face d'extrémité de dessus et de dessous de l'accumulateur sont symétriques, alors l'empilement d'électrodes dans l'épaisseur totale de l'accumulateur doit être de préférence symétrique par rapport au centre de l'empilement de façon à assurer une bonne homogénéité pour le dégagement d'énergie générée par effet joule. La dissipation thermique peut ainsi s'opérer de façon équivalente sur les deux grandes faces de l'accumulateur prismatique selon l'invention.

A contrario, en cas de conditions thermiques limites non symétriques, alors l'empilement peut être de préférence non symétrique par rapport au centre de l'empilement, toujours dans le but d'assurer une bonne homogénéité thermique.

Grâce à l'invention, on peut ainsi réaliser des formats d'accumulateurs à empilement usuellement dédiés à des fortes capacités sans risque de voir des échauffements localisés trop importants qui dégraderaient la durée de vie.

Autrement dit, adapter l'épaisseur et le grammage de couches actives des électrodes en fonction de leur position dans l'empilement permet d'accéder à des formats d'accumulateurs prismatiques de plus grandes capacités que ceux de l'état de l'art tout en conservant un niveau de densité d'énergie élevée.

Typiquement, pour des surfaces équivalentes à celles d'accumulateurs commerciaux, comme ceux des groupes 1 et 2 précités dans les tableaux 1 et 2, en augmentant l'épaisseur totale de l'empilement des électrodes de l'ordre de +20% à 40% minimum, mais répartie avec les différentes épaisseurs d'électrode, selon les conditions thermiques au sein de l'empilement, on peut obtenir des accumulateurs prismatiques de très grande capacité.

En résumé, les avantages apportés par l'invention sont nombreux parmi lesquels on peut citer :

- la possibilité pour un accumulateur prismatique selon l'invention de fonctionner à des régimes de courant supérieurs à ceux des accumulateurs à empilement selon l'état de l'art, à surface équivalente et épaisseur totale équivalente. Cette possibilité est offerte grâce à une meilleure aptitude à pouvoir dissiper l'énergie générée au cours des phases de charge et de décharge.
- une diminution de la résistance interne au coeur de l'empilement des accumulateurs. Grâce à la mise en oeuvre de couches d'électrode de moindre épaisseur vers le centre de l'empilement, la diffusion ionique est facilitée et la résistance électronique diminuée. En effet, d'une part la résistance ionique est plus faible du fait de la moindre épaisseur des couches au coeur de l'empilement et autour de celui-ci car couche de plus faible épaisseurs. D'autre part, la résistance électronique est plus faible car on peut avoir davantage de couches d'électrodes avec une augmentation du nombre de connectiques, au sein d'un même accumulateur. Cette diminution de résistance interne a pour conséquence de permettre un gain d'efficacité en charge pour l'accumulateur: une plus grande quantité de capacité peut être chargée à un régime donné de X fois C jusqu'à la tension d'arrêt, tension de fin de charge. De la même façon, en décharge, un accumulateur de plus faible résistance interne présente une tension au cours de la décharge, sous un régime de décharge donné de X fois C, plus élevée tout au long de la décharge. Par conséquent, le gain d'efficacité en charge et en décharge a un effet bénéfique sur le cyclage et donc cela permet, à régime nominal de X fois C, d'augmenter le nombre de cycles de charge/décharge atteignable jusqu'au critère habituel de fin de vie, typiquement à 80% de la capacité initiale de début de vie.
- la possibilité de dimensionner des formats d'accumulateurs prismatiques à empilement de plus grandes capacités tout en conservant un niveau de densité d'énergie élevé. Typiquement, on peut envisager de réaliser des accumulateurs de grandes surfaces, par exemple de 35 cm x 35 cm avec une épaisseur pouvant atteindre 20mm ou plus. En outre, on peut envisager de réaliser des accumulateurs de forte capacité selon l'invention, avec une conception interne améliorée d'empilement des électrodes pour drainer des courants soutenus, par exemple jusqu'à des régimes de courant 2C, et donc des accumulateurs qui présentent des bonnes performances à des niveaux de puissance relativement élevés, quand bien même ce type d'accumulateurs est plutôt usuellement dédié à des applications de type énergie. L'avantage direct est la possibilité de diminuer le nombre total d'accumulateurs utilisés pour construire des modules ou pack-batteries d'une énergie donnée et de simplifier l'assemblage interne de ces modules en limitant par exemple le nombre de branches électriques parallèles dédiées dans une configuration habituelle d'un module batterie de type xS yP ((x S étant le nombre X d'accumulateurs reliés en série et yP étant le nombre Y d'accumulateurs reliés en parallèle). Au final, cette construction simplifiée de module batteries peut avoir également un impact non négligeable sur le coût global de solution de pack batteries.

Avantageusement, la variation d'épaisseur des électrodes négatives et/ou des électrodes positives entre le centre et les extrémités de l'empilement est comprise entre 20 et 200 $\mu$m.

Un accumulateur selon l'invention, typiquement avec un couple d'électrodes à base LFP/ graphite, peut présenter l'une ou l'autre des caractéristiques avantageuses suivantes :

- la couche de matériau actif des électrodes négatives en extrémité d'empilement présente une épaisseur supérieure à 150 $\mu$m;
- la couche de matériau actif des électrodes négatives au centre de l'empilement présente une épaisseur inférieure à 150 $\mu$m;
- la couche de matériau actif des électrodes positives en extrémité d'empilement présente une épaisseur supérieure à 225 $\mu$m ;
- la couche de matériau actif des électrodes positives au centre de l'empilement présente une épaisseur inférieure à 225 $\mu$m.

De préférence, le feuillard d'électrodes présentant une épaisseur comprise entre 10 et 20 μm. De préférence encore, le feuillard est en aluminium ou en cuivre.

Selon une première variante de réalisation, l'accumulateur comprend deux groupes d'électrodes négatives et positives, l'épaisseur de couches de matériau actif d'une même polarité étant différente entre les deux groupes, le premier groupe étant agencé aux extrémités d'empilement, le second groupe étant agencé au centre de l'empilement, l'épaisseur cumulée des électrodes du premier groupe étant égale à environ 2/3 de l'épaisseur totale (Etotale) de l'empilement, tandis que celle du deuxième groupe est égale à environ 1/3 de l'épaisseur totale (Etotale).

Selon une deuxième variante de réalisation, l'accumulateur comprend deux groupes d'électrodes négatives et positives, l'épaisseur de couches de matériau actif d'une même polarité étant différente entre les deux groupes, le premier groupe d'électrodes étant agencé aux extrémités d'empilement, le second groupe étant agencé au centre de l'empilement, l'épaisseur cumulée des électrodes du premier groupe étant égale à celle du deuxième groupe.

Selon une troisième variante de réalisation, l'accumulateur comprend deux groupes d'électrodes négatives et positives, l'épaisseur de couches de matériau actif d'une même polarité étant différente entre les deux groupes, le premier groupe d'électrodes étant agencé aux extrémités d'empilement, le second groupe étant agencé au centre de l'empilement, l'épaisseur cumulée des électrodes du premier groupe étant égale à environ 1/3 de l'épaisseur totale (Etotale) de l'empilement, tandis que celle du deuxième groupe est égale à environ 2/3 de l'épaisseur totale (Etotale).

L'invention a également pour objet l'utilisation de l'accumulateur selon l'une des première ou deuxième variantes précitées, pour des applications de type énergie, correspondant à un régime de courant maximal d'1C.

L'invention a également pour objet l'utilisation de l'accumulateur selon la troisième variante précitée, pour des applications avec pulses de puissance correspondant à des pics de courant typiquement entre 2C et 5C.

L'invention concerne enfin une batterie ou accumulateur au métal-ion, tel qu'un accumulateur lithium-ion (Li-ion) tel que décrit précédemment, comportant un emballage souple ou un boitier dans lequel l'empilement de cellules est logé.

De préférence :

- le boitier est à base d'aluminium ;
- le feuillard métallique d'électrode(s) négative(s) est en cuivre ;
- le matériau actif d'insertion d'électrode(s) négative(s) est choisi dans le groupe comportant le graphite, le lithium, l'oxyde de titanate $Li_4TiO_5O_{12}$ ; ou à base de silicium ou à base de lithium, ou à base d'étain et de leurs alliages ;
- le feuillard métallique d'électrode(s) positive(s) est en aluminium;
- le matériau actif d'insertion d'électrode(s) positive(s) est choisi dans le groupe comportant le phosphate de fer lithié $LiFePO_4$, l'oxyde de cobalt lithié $LiCo02$, l'oxyde manganèse lithié, éventuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, $LiNiMnCoO_2$ ou l'oxyde de nickel cobalt aluminium lithié $LiNiCoAlO_2$.

Description détaillée

D'autres avantages et caractéristiques de l'invention ressortiront mieux à la lecture de la description détaillée d'exemples de mise en oeuvre de l'invention faite à titre illustratif et non limitatif en référence aux figures suivantes parmi lesquelles :

- la figure 1 est une vue schématique en perspective éclatée montrant les différents éléments d'un accumulateur lithium-ion,
- la figure 2 est une vue de face montrant un accumulateur lithium-ion avec son emballage souple selon l'état de l'art,
- la figure 3 est une vue en perspective d'un accumulateur lithium-ion selon l'état de l'art avec son emballage souple ;
- la figure 4 est une vue en perspective d'un accumulateur lithium-ion prismatique à empilement d'électrodes selon l'état de l'art;
- la figure 5 est une vue en perspective montrant un boitier rigide pour loger un accumulateur prismatique selon la figure 5;
- - les figures 6A et 6B sont des vues respectivement de côté et de dessus d'une électrode positive destinée à un accumulateur prismatique à empilement selon l'état de l'art ;
- les figures 7A et 7B sont des vues respectivement de côté et de dessus d'une électrode négative destinée à un accumulateur prismatique à empilement selon l'état de l'art;
- la figure 8 illustre sous forme de courbes le facteur d'échauffement en fonction du ratio épaisseur sur la surface de deux groupes d'accumulateurs prismatiques à empilement selon l'état de l'art;
- la figure 9 est une vue en coupe transversale d'un premier exemple d'empilement d'électrodes dans un accumulateur prismatique selon l'invention ;
- la figure 10 est une vue en coupe transversale d'un second exemple d'empilement d'électrodes dans un accumulateur prismatique selon l'invention.

Par souci de clarté, les mêmes références désignant les mêmes éléments d'un accumulateur au lithium-ion selon l'état de l'art et selon l'invention sont utilisées pour toutes les figures 1 à 10.

On précise que les différents éléments selon l'invention sont représentés uniquement par souci de clarté et qu'ils ne sont pas à l'échelle.

On précise également que le terme de « longueur » et « latéral » se rapportant à une électrode est à considérer lorsqu'elle est à plat avant son bobinage.

Les termes de «dessus » et «dessous » se rapportant à un accumulateur prismatique à empilement d'électrodes est à considérer en configuration à plat avec les surfaces d'électrode à l'horizontales et les faces d'extrémité respectivement sur le haut et sur le bas.

Les figures 1 à 8 ont déjà été commentées en détail en préambule. Elles ne sont donc pas décrites ci-après.

Comme détaillé en préambule, les inventeurs ont pu constater qu'un accumulateur Li-ion à forte capacité, tel qu'il est actuellement réalisé par empilement d'électrodes, présente des limites de design.

D'une part, il est difficilement envisageable d'augmenter leur épaisseur totale au-delà d'une certaine limite, afin d'augmenter la quantité d'énergie pour une surface donnée. En effet, des échauffements localisés peuvent se produire avec un fort risque de dysfonctionnement électrique et de sécurité.

De tels échauffements sont directement liés à la part de résistance ionique de l'accumulateur et aux conditions limites, contraignant l'évacuation de la puissance thermique dégagée.

D'autre part, l'augmentation de surface des électrodes au-delà d'une certaine limite oblige à abaisser le régime de passage de courant.

En effet, dans le cas d'électrodes de grandes surfaces, les lignes de courant qui s'établissent de la périphérie des électrodes jusqu'aux connectiques externes sont plus longues: les électrons ayant plus de distance à parcourir, la résistance électronique est de ce fait plus importante.

Aussi, les échauffements qui se produisent sont directement liés à la part de résistance électronique de la résistance interne globale de l'accumulateur.

Aussi, pour pallier ces inconvénients, et pouvoir proposer des accumulateurs Li-ion, à empilement de plus forte capacité et de plus grande densité d'énergie les inventeurs proposent une adaptation de l'épaisseur des électrodes en fonction de leur position au sein de l'empilement.

Ainsi, on réalise au moins deux groupes d'électrodes d'épaisseur différentes avec la plus faible valeur d'épaisseur au coeur (centre) de l'empilement.

Dans les exemples qui vont suivre, les feuillards métalliques de section carrée ou rectangulaire supportant les matériaux actif d'insertion d'électrodes peuvent avoir une épaisseur comprise entre 5 et 50 $\mu$m.

Pour un feuillard d'anode 3, il peut s'agir avantageusement d'un feuillard en cuivre d'épaisseur de l'ordre de 12 $\mu$m.

Pour un feuillard de cathode 2, il peut s'agir avantageusement d'un feuillard en aluminium d'épaisseur de l'ordre de 20 $\mu$m.

Les électrodes positive 2 ou négative 3 selon l'invention, comprennent comme usuellement une bande latérale métallique ou rive dépourvue de matériau actif d'insertion et une portion centrale qui supporte une couche de matériau actif d'insertion continue sur toute sa longueur.

Dans un empilement selon l'invention, pour un dimensionnement des quantités d'énergies en vis-à-vis, les paramètres susceptibles de varier en fonction de la nature des matériaux d'électrodes utilisés sont les suivants :

    a/ densité des matériaux actifs d'insertion,
    b/ grammage des couches de matériaux actifs déposées,
    c/ épaisseur des électrodes.

En général, les épaisseurs des électrodes positives ne sont généralement pas égales à celles des électrodes négatives qui sont en vis-à-vis au sein d'un même empilement. En effet, comme précisé ci-dessus, les épaisseurs sont dépendantes de la nature des matériaux d'insertion utilisés et des densités d'énergie en vis-à-vis, avec en général les paramètres a/, b/ et c/ différents entre électrodes positives et négatives.

On décrit maintenant deux exemples de réalisation d'un accumulateur Li-ion constitué d'un empilement d'électrodes positives 2 et d'électrodes négatives 3 avec au moins deux valeurs d'épaisseur différentes dans l'empilement, conformément à l'invention.

Dans ces deux exemples, les épaisseurs des couches actives des électrodes négative et positive augmentent de façon identique du coeur (centre) de l'empilement vers ses extrémités.

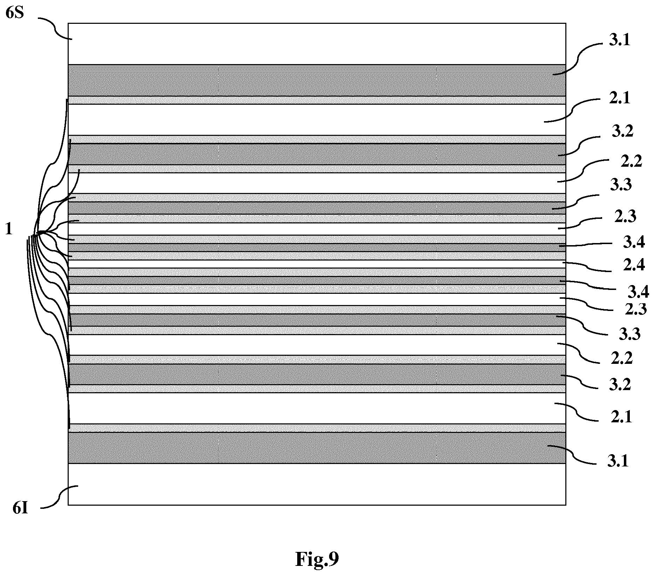

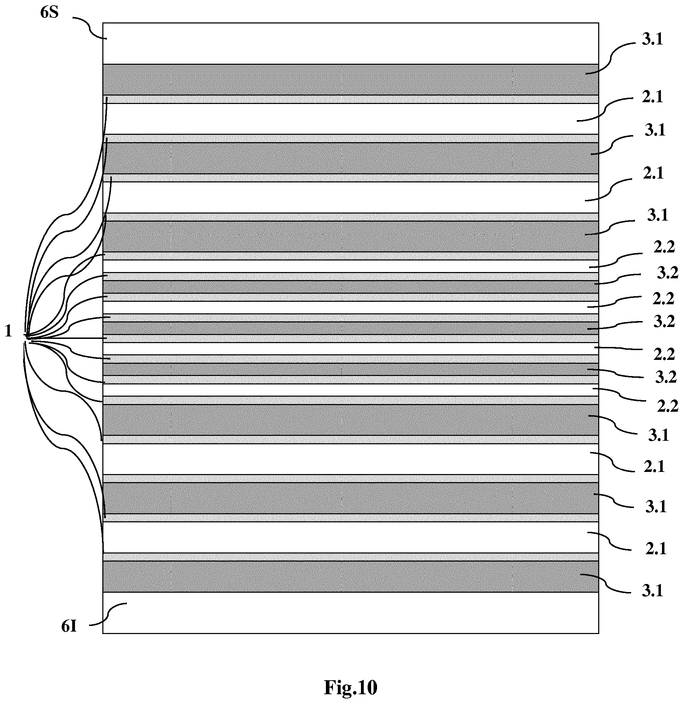

En outre, comme cela ressort explicitement des figures 9 et 10, l'empilement d'électrodes dans l'épaisseur totale de l'accumulateur est symétrique entre faces de dessus 6S et de dessous 6I de l'empilement, constituées par les faces de l'emballage 6.

Cette symétrie permet d'assurer une homogénéité dans le dégagement d'énergie générée par effet joule. Autrement dit, la dissipation thermique peut s'opérer de façon équivalente sur les deux faces principales de l'accumulateur prismatique.

Dans ces deux exemples, les électrodes positives 2 ont une couche de matériau actif d'insertion à base de LiFePO$_4$, de capacité théorique totale de 160 à 165 mAh/g, tandis que les couches actives des électrodes négatives sont à base de graphite, de capacité théorique totale de 390 à 400 mAh/g.

Exemple 1: On réalise un empilement d'électrodes avec quatre niveaux d'épaisseur différents. Cet exemple 1 est illustré en figure 9.

L'épaisseur totale et le grammage des couches actives des électrodes négatives aux extrémités de l'empilement, i.e. les électrodes 3.1, sont supérieurs à celles adjacentes, i.e. les électrodes 3.2 et ainsi de suite jusqu'aux électrodes 3.4 au coeur de l'empilement.

Il en va de même avec les épaisseurs totales et le grammage des couches actives des électrodes positives, l'épaisseur totale et le grammage les plus faibles étant ceux de l'électrode positive 2.4 au centre, l'épaisseur et le grammage le plus important étant ceux des électrodes 2.1 aux extrémités de l'empilement.

Les caractéristiques des couches actives des différentes électrodes dans cet exemple 1 sont indiquées dans le tableau 3 ci-dessous.

On précise ici que la valeur de grammage et d'épaisseur totale de l'électrode est une valeur moyenne.

**TABLEAU 3**

| Types d'électrodes en fonction de leur position dans l'empilement | Grammage de la couche de matériau actif d'électrode (mg/cm$^2$/face de feuillard) | Epaisseur totale de l'électrode ($\mu$m (microns)) |
|---|---|---|
| Electrode négative 3.1 | 11,0 | 170 |
| Electrode positive 2.1 | 25,0 | 265 |
| Electrode négative 3.2 | 9,0 | 140 |
| Electrode positive 2.2 | 20,0 | 215 |
| Electrode négative 3.3 | 8,0 | 127 |
| Electrode positive 2.3 | 18,0 | 195 |
| Electrode négative 3.4 | 7,0 | 115 |
| Electrode positive 2.4 | 16,0 | 175 |

Exemple 2: On réalise un empilement d'électrodes avec deux niveaux d'épaisseur différents. Cet exemple 2 est illustré en figure 10.

L'épaisseur totale et le grammage des couches actives des électrodes négatives aux extrémités de l'empilement, i.e. les électrodes 3.1, sont supérieurs à celles adjacentes, i.e. les électrodes 3.2 et ainsi de suite jusqu'aux électrodes 3.4 au coeur de l'empilement.

Il en va de même avec les épaisseurs totales et le grammage des couches actives des électrodes positives, l'épaisseur totale et le grammage les plus faibles étant ceux de l'électrode positive 2.4 au centre, l'épaisseur et le grammage le plus important étant ceux des électrodes 2.1 aux extrémités de l'empilement.

Les caractéristiques des couches actives des différentes électrodes dans cet exemple 1 sont indiquées dans le tableau 4 ci-dessous.

On précise ici que la valeur de grammage et d'épaisseur totale de l'électrode est une valeur moyenne.

**TABLEAU 4**

| Types d'électrodes en fonction de leur position dans l'empilement | Grammage de la couche de matériau actif d'électrode (mg/cm$^2$/face de feuillard) | Epaisseur totale de l'électrode ($\mu$m (microns)) |
|---|---|---|
| Electrode négative 3.1 | 11,0 | 170 |
| Electrode positive 2.1 | 25,0 | 265 |
| Electrode négative 3.2 | 9,0 | 140 |

(suite)

| Types d'électrodes en fonction de leur position dans l'empilement | Grammage de la couche de matériau actif d'électrode (mg/cm$^2$/face de feuillard) | Epaisseur totale de l'électrode ($\mu$m (microns)) |
|---|---|---|
| Electrode positive 2.2 | 20,0 | 215 |

D'autres variantes et améliorations peuvent être apportées sans pour autant sortir du cadre de l'invention.

On peut ainsi envisager différentes variantes de niveaux d'épaisseur et de graduation d'épaisseur niveau par niveau.

Par exemple en se référant au cas de l'exemple 2 ci-avant, on peut envisager les variantes suivantes, indiquées dans le tableau 5.

On précise que dans ce tableau « Etotale » désigne l'épaisseur totale de l'empilement d'accumulateur, sans son emballage.

### TABLEAU 5

| Variantes | Epaisseur cumulée des électrodes 2.1 et 3.1, en début d'empilement (partie inférieure) | Epaisseur cumulée des électrodes 2.2 et 3.2, au centre de l'empilement | Epaisseur cumulée des électrodes 2.1 et 3.1, en fin d'empilement (partie supérieure) |
|---|---|---|---|
| Variante 1 | 1/3 Etotale | 1/3 Etotale | 1/3 Etotale |
| Variante 2 | 1/4 Etotale | 1/2 Etotale | 1/4 Etotale |
| Variante 3 | 1/6 Etotale | 2/3 Etotale | 1/6 Etotale |

Pour des applications de type énergie, correspondant à un régime de courant maximale d'1C, on privilégiera la configuration de variante 1 avec donc davantage de couches d'électrodes épaisses 2.1, 3.1.

Pour des applications avec pulses de puissance correspondant à des pics de courant typiquement entre 2C et 5C, on privilégiera la configuration de variante 3 avec donc un nombre de couches d'électrodes minces 2.2, 3.2 augmenté au centre de l'empilement.

L'invention n'est pas limitée aux exemples qui viennent d'être décrits ; on peut notamment combiner entre elles des caractéristiques des exemples illustrés au sein de variantes non illustrées.

Une électrode selon l'invention peut être réalisée quels que soient le matériau actif et les composants de l'électrode (collecteur, liants, conducteurs électroniques, additifs).

Les étapes d'empilement sont celles usuelles pour réaliser un accumulateur métal-ion à empilement.

Dans tous les exemples illustrés, on réalise les épaisseurs de couche de matériau actif d'insertion sur les deux faces du feuillard d'une même électrode donnée.

Il va de soi que l'invention s'applique également à un empilement avec certaines couches de matériau actif qui ne seraient enduites que sur une seule des deux faces du feuillard. Cela peut concerner principalement les deux électrodes situées soit à l'extrémité supérieure soit à l'extrémité inférieure de l'empilement.

### Références citées

[1] : « Thermal Characterization of Advanced Lithium-Ion Polymer Cells », Third Advanced Automotive Battery Conference, June 2003.

[2] : « Evaluation Study for Large Prismatic Lithium-Ion Cell Designs Using Multi-Scale Multi-Dimensional Battery Model », Gi-Heon Kim and Kandler Smith, ECS, 2004.

### Revendications

1. Accumulateur métal-ion (A), comprenant un empilement de cellules électrochimiques élémentaires comprenant chacune une cathode (2), une anode (3), et un séparateur (1) imprégné d'électrolyte intercalé entre l'anode et la cathode, chaque anode et cathode étant constituée d'un substrat (2S, 3S) formé d'un feuillard métallique comprenant une portion centrale (22, 32) supportant, sur au moins une de ses faces principales, une couche de matériau actif d'insertion d'ion métal, l'épaisseur et le grammage des couches de matériau actif des électrodes d'une même polarité (anode ou cathode) ayant au moins deux valeurs différentes au sein de l'empilement, l'épaisseur et le grammage (la) le plus faible étant celle des électrodes au centre de l'empilement.

2. Accumulateur métal-ion (A), selon la revendication 1, la variation d'épaisseur des électrodes négatives entre le centre et les extrémités de l'empilement étant comprise entre 20 et 200 $\mu$m.

3. Accumulateur métal-ion (A), selon la revendication 1 ou 2, la variation d'épaisseur des électrodes positives entre le centre et les extrémités de l'empilement étant comprise entre 20 et 200 $\mu$m.

4. Accumulateur métal-ion (A) selon l'une des revendications précédentes, la couche de matériau actif des électrodes négatives (3.1) en extrémité d'empilement présentant une épaisseur supérieure à 150 $\mu$m.

5. Accumulateur métal-ion (A) selon l'une des revendications précédentes, la couche de matériau actif des électrodes négatives (3.4) au centre de l'empilement présentant une épaisseur inférieure à 150 $\mu$m.

6. Accumulateur métal-ion (A) selon l'une des revendications précédentes, la couche de matériau actif des électrodes positives (2.1) en extrémité d'empilement présentant une épaisseur supérieure à 225 $\mu$m.

7. Accumulateur métal-ion (A) selon l'une des revendications précédentes, la couche de matériau actif des électrodes positives (2.4) au centre de l'empilement présentant une épaisseur inférieure à 225 $\mu$m.

8. Accumulateur métal-ion (A) selon l'une des revendications précédentes, le feuillard d'électrodes présentant une épaisseur comprise entre 10 et 20 $\mu$m.

9. Accumulateur métal-ion (A) selon l'une des revendications précédentes, le feuillard étant en aluminium ou en cuivre.

10. Accumulateur métal-ion (A) selon l'une des revendications précédentes, comprenant deux groupes d'électrodes négatives et positives, l'épaisseur de couches de matériau actif d'une même polarité étant différente entre les deux groupes, le premier groupe d'électrodes (2.1, 3.1) étant agencé aux extrémités d'empilement, le second groupe (2.2, 3.2) étant agencé au centre de l'empilement, l'épaisseur cumulée des électrodes du premier groupe étant égale à environ 2/3 de l'épaisseur totale (Etotale) de l'empilement, tandis que celle du deuxième groupe est égale à environ 1/3 de l'épaisseur totale (Etotale).

11. Accumulateur métal-ion (A) selon l'une des revendications 1 à 9, comprenant deux groupes d'électrodes négatives et positives, l'épaisseur de couches de matériau actif d'une même polarité étant différente entre les deux groupes, le premier groupe d'électrodes (2.1, 3.1) étant agencé aux extrémités d'empilement, le second groupe (2.2, 3.2) étant agencé au centre de l'empilement, l'épaisseur cumulée des électrodes du premier groupe étant égale à celle du deuxième groupe.

12. Accumulateur métal-ion (A) selon l'une des revendications 1 à 9, comprenant deux groupes d'électrodes négatives et positives, l'épaisseur de couches de matériau actif d'une même polarité étant différente entre les deux groupes, le premier groupe d'électrodes (2.1, 3.1) étant agencé aux extrémités d'empilement, le second groupe (2.2, 3.2) étant agencé au centre de l'empilement, l'épaisseur cumulée des électrodes du premier groupe étant égale à environ 1/3 de l'épaisseur totale (Etotale) de l'empilement, tandis que celle du deuxième groupe est égale à environ 2/3 de l'épaisseur totale (Etotale).

13. Utilisation de l'accumulateur selon l'une des revendications 10 ou 11, pour des applications de type énergie, correspondant à un régime de courant maximal d'1C.

14. Utilisation de l'accumulateur selon la revendication 12, pour des applications avec pulses de puissance correspondant à des pics de courant typiquement entre 2C et 5C.

15. Batterie ou accumulateur au métal-ion, tel qu'un accumulateur lithium-ion (Li-ion) selon l'une quelconque des revendications 1 à 12, comportant un emballage souple (6) ou un boitier dans lequel l'empilement de cellules est logé.

16. Batterie ou accumulateur Li-ion selon la revendication 14, dans laquelle :

- le boitier est à base d'aluminium ;
- le feuillard métallique d'électrode(s) négative(s) est en cuivre ;
- le matériau actif d'insertion d'électrode(s) négative(s) est choisi dans le groupe comportant le graphite, le lithium, l'oxyde de titanate $Li_4TiO_5O_{12}$; ou à base de silicium ou à base de lithium, ou à base d'étain et de leurs alliages ;
- le feuillard métallique d'électrode(s) positive(s) est en aluminium;
- le matériau actif d'insertion d'électrode(s) positive(s) est choisi dans le groupe comportant le phosphate de fer lithié $LiFePO_4$, l'oxyde de cobalt lithié LiCo02, l'oxyde manganèse lithié, éventuellement substitué, $LiMn_2O_4$ ou un matériau à base de $LiNi_xMn_yCo_zO_2$ avec x+y+z = 1, tel que $LiNi_{0.33}Mn_{0.33}Co_{0.33}O_2$, ou un matériau à base de $LiNi_xCo_yAl_zO_2$ avec x+y+z = 1, $LiMn_2O_4$, $LiNiMnCoO_2$ ou l'oxyde de nickel cobalt aluminium lithié $LiNiCoAlO_2$.

## Patentansprüche

1. Metallionen-Akkumulator (A), umfassend einen Stapel elektrochemischer Elementarzellen, umfassend jeweils eine Kathode (2), eine Anode (3) und einen Separator (1), der mit einem zwischen der Anode und Kathode angeordneten Elektrolyten imprägniert ist, wobei jede Anode und Kathode aus einem Substrat (2S, 3S) besteht, welches aus einem Metallblech gebildet ist, das einen zentralen Abschnitt (22, 32) umfasst, der, auf mindestens einer seiner Hauptflächen, eine aktive Materialschicht zum Einführen eines Metallions trägt, wobei die Dicke und die Grammatur der aktiven Materialschichten der Elektroden mit derselben Polarität (Anode oder Kathode) mindestens zwei verschiedene Werte im Inneren des Stapels aufweisen, wobei die schwächste Dicke und Grammatur jene der Elektroden im Zentrum des Stapels sind.

2. Metallionen-Akkumulator (A) nach Anspruch 1,
wobei die Variation der Dicke der negativen Elektroden zwischen dem Zentrum und den Enden des Stapels zwischen 20 und 200 $\mu$m beträgt.

3. Metallionen-Akkumulator (A) nach Anspruch 1 oder 2,
wobei die Variation der Dicke der positiven Elektroden zwischen dem Zentrum und den Enden des Stapels zwischen 20 und 200 $\mu$m beträgt.

4. Metallionen-Akkumulator (A) nach einem der vorhergehenden Ansprüche,
wobei die aktive Materialschicht der negativen Elektroden (3.1) am Ende des Stapels eine Dicke von mehr als 150 $\mu$m aufweist.

5. Metallionen-Akkumulator (A) nach einem der vorhergehenden Ansprüche,
wobei die aktive Materialschicht der negativen Elektroden (3.4) im Zentrum des Stapels eine Dicke von weniger als 150 $\mu$m aufweist.

6. Metallionen-Akkumulator (A) nach einem der vorhergehenden Ansprüche,
wobei die aktive Materialschicht der positiven Elektroden (2.1) am Ende des Stapels eine Dicke von mehr als 225 $\mu$m aufweist.

7. Metallionen-Akkumulator (A) nach einem der vorhergehenden Ansprüche,
wobei die aktive Materialschicht der positiven Elektroden (2.4) im Zentrum des Stapels eine Dicke von weniger als 225 $\mu$m aufweist.

8. Metallionen-Akkumulator (A) nach einem der vorhergehenden Ansprüche,
wobei das Blech der Elektroden eine Dicke zwischen 10 und 20 $\mu$m aufweist.

9. Metallionen-Akkumulator (A) nach einem der vorhergehenden Ansprüche,
wobei das Blech aus Aluminium oder aus Kupfer ist.

10. Metallionen-Akkumulator (A) nach einem der vorhergehenden Ansprüche,
umfassend zwei Gruppen negativer und positiver Elektroden, wobei die Dicke der aktiven Materialschicht mit derselben Polarität zwischen den beiden Gruppen verschieden ist, wobei die erste Gruppe der Elektroden (2.1, 3.1) an den Enden des Stapels angeordnet ist, wobei die zweite Gruppe (2.2., 3.2) im Zentrum des Stapels angeordnet ist, wobei die kumulierte Dicke der Elektroden der ersten Gruppe ungefähr gleich 2/3 der Gesamtdicke (Etotale) des Stapels ist, während jene der zweiten Gruppe ungefähr gleich 1/3 der Gesamtdicke (Etotale) ist.

11. Metallionen-Akkumulator (A) nach einem der Ansprüche 1 bis 9, umfassend zwei Gruppen negativer und positiver Elektroden, wobei die Dicke der aktiven Materialschicht mit derselben Polarität zwischen den beiden Gruppen verschieden ist, wobei die erste Gruppe der Elektroden (2.1, 3.1) an den Enden des Stapels angeordnet ist, wobei die zweite Gruppe (2.2., 3.2) im Zentrum des Stapels angeordnet ist, wobei die kumulierte Dicke der Elektroden der ersten Gruppe ungefähr gleich jener der zweiten Gruppe ist.

12. Metallionen-Akkumulator (A) nach einem der Ansprüche 1 bis 9, umfassend zwei Gruppen negativer und positiver Elektroden, wobei die Dicke der aktiven Materialschicht mit derselben Polarität zwischen den beiden Gruppen verschieden ist, wobei die erste Gruppe der Elektroden (2.1, 3.1) an den Enden des Stapels angeordnet ist, wobei die zweite Gruppe (2.2, 3.2) im Zentrum des Stapels angeordnet ist, wobei die kumulierte Dicke der Elektroden der ersten Gruppe ungefähr gleich 1/3 der Gesamtdicke (Etotale) des Stapels ist, während jene der zweiten Gruppe ungefähr gleich 2/3 der Gesamtdicke (Etotale) ist.

13. Verwendung des Akkumulators nach einem der Ansprüche 10 oder 11, für Anwendungen des Energietyps, entsprechend einem maximalen Überstromzustand von 1C.

14. Verwendung des Akkumulators nach Anspruch 12, für Anwendungen mit Leistungsimpulsen entsprechend Stromspitzen typischerweise zwischen 2C und 5C.

15. Metallionen-Batterie oder -Akkumulator, wie ein Lithiumionen- (Li-Ionen-) Akkumulator nach einem der Ansprüche 1 bis 12, umfassend eine nachgiebige Hülle (6) oder ein Gehäuse, in dem der Stapel von Zellen angeordnet ist.

16. Li-Ionen-Batterie oder -Akkumulator nach Anspruch 14, wobei:

- das Gehäuse auf Aluminium basiert;
- das Metallblech der negativen Elektrode(n) aus Kupfer ist;
- das aktive Material zum Einführen von (einer) negativen Elektrode(n) ausgewählt ist aus der Gruppe umfassend Graphit, Lithium, Titanatoxid $Li_4TiO_5O_{12}$, oder auf Silicium basiert oder auf Lithium basiert, oder auf Zinn und deren Legierungen basiert;
- das Metallblech der positiven Elektrode (n) aus Aluminium ist;
- das aktive Material zum Einführen von (einer) positiven Elektrode(n) ausgewählt ist aus der Gruppe umfassend Lithiumeisenphosphat $LiFePO_4$, Lithiumkobaltoxid $LiCoO_2$, gegebenenfalls substituiertem Lithiummanganoxid $LiMn_2O_4$, oder einem Material auf der Basis von $LiNi_xMn_yCo_zO_2$, wobei x+y+z = 1, wie $LiNi_{0,33}Mn_{0,33}Co_{0,33}O_2$, oder einem Material auf der Basis von $LiNi_xCo_yAl_zO_2$, wobei x+y+z = 1, $LiMn_2O_4$, $LiNiMnCoO_2$ oder Lithiumnickelcobaltaluminiumoxid $LiNiCoAlO_2$.

**Claims**

1. Metal-ion accumulator (A) comprising a stack of elementary electrochemical cells, each comprising a cathode (2), an anode (3) and an electrolyte-impregnated separator (1) that is intercalated between the anode and the cathode, each anode and cathode consisting of a substrate (2S, 3S) that is formed of a metal foil comprising a central portion (22, 32) bearing, on at least one of its main faces, a layer of active metal-ion insertion material, the thickness and the grammage of the layers of active material of the electrodes of the same polarity (anode or cathode) having at least two different values within the stack, the lowest thickness and grammage being that of the electrodes at the centre of the stack.

2. Metal-ion accumulator (A) according to Claim 1, the variation in the thickness of the negative electrodes between the centre and the ends of the stack being between 20 and 200 $\mu$m.

3. Metal-ion accumulator (A) according to Claim 1 or 2, the variation in the thickness of the positive electrodes between the centre and the ends of the stack being between 20 and 200 $\mu$m.

4. Metal-ion accumulator (A) according to one of the preceding claims, the thickness of the layer of active material of the negative electrodes (3.1) at the end of the stack being higher than 150 $\mu$m.

5. Metal-ion accumulator (A) according to one of the preceding claims, the thickness of the layer of active material of the negative electrodes (3.4) at the centre of the stack being lower than 150 $\mu$m.

6. Metal-ion accumulator (A) according to one of the preceding claims, the thickness of the layer of active material of the positive electrodes (2.1) at the end of the stack being higher than 225 $\mu$m.

7. Metal-ion accumulator (A) according to one of the preceding claims, the thickness of the layer of active material of the positive electrodes (2.4) at the centre of the stack being lower than 225 $\mu$m.

8. Metal-ion accumulator (A) according to one of the preceding claims, the thickness of the electrode foil being between 10 and 20 $\mu$m.

9. Metal-ion accumulator (A) according to one of the preceding claims, the foil being made of aluminium or of copper.

10. Metal-ion accumulator (A) according to one of the preceding claims, comprising two groups of negative and positive electrodes, the thickness of layers of active material of the same polarity being different between the two groups, the first group of electrodes (2.1, 3.1) being arranged at the ends of the stack, the second group (2.2, 3.2) being arranged at the centre of the stack, the combined thickness of the electrodes of the first group being equal to approximately 2/3 of the total thickness (Etotal) of the stack, while that of the second group is equal to approximately 1/3 of the total thickness (Etotal).

11. Metal-ion accumulator (A) according to one of Claims 1 to 9, comprising two groups of negative and positive electrodes, the thickness of layers of active material of the same polarity being different between the groups, the first group of electrodes (2.1, 3.1) being arranged at the ends of the stack, the second group (2.2, 3.2) being arranged at the centre of the stack, the combined thickness of the electrodes of the first group being equal to that of the second group.

12. Metal-ion accumulator (A) according to one of Claims 1 to 9, comprising two groups of negative and positive electrodes, the thickness of layers of active material of the same polarity being different between the two groups, the first group of electrodes (2.1, 3.1) being arranged at the ends of the stack, the second group (2.2, 3.2) being arranged at the centre of the stack, the combined thickness of the electrodes of the first group being equal to approximately 1/3 of the total thickness (Etotal) of the stack, while that of the second group is equal to approximately 2/3 of the total thickness (Etotal).

13. Use of the accumulator according to either of Claims 10 and 11 for energy applications, corresponding to a maximum current rate of 1C.

14. Use of the accumulator according to Claim 12 for applications with power pulses corresponding to current peaks that are typically between 2C and 5C.

15. Metal-ion accumulator or battery, such as a lithium-ion (Li-ion) accumulator, according to any one of claims 1 to 12, including a flexible package (6) or a casing in which the stack of cells is housed.

16. Li-ion accumulator or battery according to Claim 14, wherein:

   - the casing is based on aluminium;
   - the metal foil of the negative electrode(s) is made of copper;
   - the active insertion material of the negative electrode(s) is chosen from the group including graphite, lithium or titanate oxide $Li_4TiO_5O_{12}$, or is based on silicon, based on lithium or based on tin and on their alloys;
   - the metal foil of the positive electrode(s) is made of aluminium;
   - the active insertion material of the positive electrode(s) is chosen from the group including lithium iron phosphate $LiFePO_4$, lithium cobalt oxide $LiCoO_2$, (optionally substituted) lithium manganese oxide $LiMn_2O_4$ or a material based on $LiNi_xMn_yCo_zO_2$ where x+y+z = 1, such as $LiNi_{0.33}Mn_{0.33}Co_{0.33}O_2$, or a material based on $LiNi_xCo_yAl_zO_2$ where x+y+z = 1, $LiMn_2O_4$, $LiNiMnCoO_2$ or lithium nickel cobalt aluminium oxide $LiNiCoAlO_2$.

# Fig.1

# Fig.2

# Fig.3

**Fig.4**

**Fig.5**

**Fig.6A**

**Fig.7A**

**Fig.6B**

**Fig.7B**

**Fig.8**

**Fig.9**

**Fig.10**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060121348 A
- US 7348098 B
- US 7338733 B
- US 2008060189 A
- US 20080057392 A
- US 7335448 B
- US 20130323564 A1

**Littérature non-brevet citée dans la description**

- Thermal Characterization of Advanced Lithium-Ion Polymer Cells. *Third Advanced Automotive Battery Conference,* Juin 2003
- **GI-HEON KIM ; KANDLER SMITH.** Evaluation Study for Large Prismatic Lithium-Ion Cell Designs Using Multi-Scale Multi-Dimensional Battery Model. *ECS,* 2004